(19) Europäisches Patentamt

European Patent Office

Office européen des brevets

(11) **EP 1 126 687 A2**

(12) **EUROPÄISCHE PATENTANMELDUNG**

(43) Veröffentlichungstag:
**22.08.2001 Patentblatt 2001/34**

(51) Int Cl.⁷: **H04M 9/08**

(21) Anmeldenummer: **00124495.3**

(22) Anmeldetag: **09.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **03.01.2000 DE 10000009**

(71) Anmelder: **ALCATEL**
**75008 Paris (FR)**

(72) Erfinder: **Matt, Hans Jürgen**
**71686 Remseck (DE)**

(74) Vertreter: **KOHLER SCHMID + PARTNER**
**Patentanwälte GbR,**
**Ruppmannstrasse 27**
**70565 Stuttgart (DE)**

(54) **Verfahren zur koordinierten Echo-und/oder Geräuschabsenkung**

(57) Ein Verfahren zur Echo- und Geräuschkompensation bei TK-Systemen, in denen TK-Endgeräte über Vermittlungseinrichtungen und Übertragungsstrecken miteinander verbunden werden, wobei in einer Teilmenge von TK-Endgeräten oder Vermittlungseinrichtungen Vorrichtungen zur Echo- und/oder Geräuschkompensation vorhanden sind, umfaßt folgende Schritte :

(a) Definieren eines einheitlichen Qualitätsmaßes für die Eigenschaften der TK-Endgeräte bzgl. ihrer Generierung von Echos bzw. Abgabe von Geräuschsignalen einschließlich eventuell vorhandener Fähigkeiten zu Kompensation und/oder Reduktion von Echosignalen;
(b) Erfassen der entsprechenden Qualitätswerte zumindest eines an einer TK-Verbindung beteiligten TK-Endgerätes;
(c) Ermitteln von zusätzlich erforderlichen Maßnahmen zur Kompensation der Echo- bzw. Geräuschsignale auf einen vorher festgelegten Restwert;
(d) Durchführen der ermittelten Maßnahmen mittels einer Kompensationsvorrichtung in mindestens einer an der TK-Verbindung beteiligten Vermittlungseinrichtung.

Damit wird in übersichtlicher, einheitlicher, unaufwendiger und kostengünstiger Weise eine optimale Adaption der Kompensationsvorrichtungen an die konkret vorhandenen Bedingungen eines Übertragungsweges bei einer TK-Verbindung in einem beliebigen Bereich eines komplexen TK-Netzwerkes erreicht und das Zusammenwirken der vorhandenen Vorrichtungen optimiert.

Fig. 2

EP 1 126 687 A2

**Beschreibung**

Die Erfindung betrifft ein Verfahren zur Kompensation und/oder Reduktion von Echo- und/oder Geräuschsignalen bei Telekommunikations(=TK)-Systemen für die Übertragung von akustischen Nutzsignalen, insbesondere menschlicher Sprache, in TK-Netzwerken, in denen TK-Endgeräte über Vermittlungseinrichtungen und Übertragungsstrecken miteinander verbunden werden, wobei zumindest in einer Teilmenge von TK-Endgeräten und/oder zumindest in einer Teilmenge von Vermittlungseinrichtungen Vorrichtungen zur Kompensation und/oder Reduktion von Echo- und/oder Geräuschsignalen vorhanden sind Ein solches Verfahren ist beispielsweise bekannt aus der DE 42 29 912 A1.

Der Begriff "Vermittlungseinrichtungen" bei einem Verfahren der eingangs genannten Art soll hier als Oberbegriff für alle möglichen Arten von Einrichtungen verstanden werden, die an einer TK-Verbindung beteiligt sind, wie beispielsweise Ortsvermittlungsstellen, Fernvermittlungsstellen, Mobilfunk-Vermittlungsstellen, Sende- und Empfangsstationen, Richtfunkeinrichtungen, Fernmeldesatelliten, Call-Center, Service-Center, Konzentratoren, Multiplexeinrichtungen, Vorfeldeinrichtungen und dergleichen, nicht jedoch für TK-Endgeräte.

Die Echo- und Geräuschunterdrückung gewinnt zunehmend an Bedeutung für die Sprachqualität in Nachrichtennetzwerken, bei denen eine Telefonübertragung durch Leitungsechos oder akustische Echos sowie durch Hintergrundgeräusche oft empfindlich gestört wird.

Während einer natürlichen Kommunikation zwischen Menschen paßt man in der Regel die Amplitude der gesprochenen Sprache automatisch an die akustische Umgebung an. Bei einer Sprachkommunikation zwischen entfernten Orten jedoch befinden sich die Gesprächspartner nicht im selben akustischen Umfeld und sind sich daher jeweils nicht der akustischen Situation am Ort des anderen Gesprächspartners bewußt. Besonders verschärft tritt daher ein Problem auf, wenn einer der Partner aufgrund seiner akustischen Umgebung gezwungen ist, sehr laut zu sprechen, während der andere Partner in einer leisen akustischen Umgebung Sprachsignale mit geringer Amplitude erzeugt.

Hinzu kommt das Problem, daß auf einem TK-Kanal auch ein "elektronisch erzeugtes" Geräusch entsteht und als Hintergrund zum Nutzsignal mitübertragen wird. Des weiteren ist es auch vorteilhaft, Störsignale wie unerwünschten Hintergrundlärm (Straßenlärm, Fabriklärm, Bürolärm, Kantinenlärm, Fluglärm etc.) zu reduzieren oder zu unterdrücken. Um den Komfort beim Telefonieren zu erhöhen, ist man generell bestrebt, jede Art von Geräusch möglichst gering zu halten.

Schließlich entstehen bei TK-Verbindungen auch noch sogenannte Echos, die an allen analogen TK-Endgeräten mit Zweidraht-Anschluß, in Zweidraht-TK-Netzen sowie grundsätzlich an allen Übergängen von Zweidraht-Betrieb auf Vierdraht-Betrieb in Form von <u>Leitungsechos</u> auftreten.

Des weiteren werden beispielsweise in TK-Endgeräten durch Rückkopplung eines Teiles der Lautsprechersignale auf das Mikrofon <u>akustische Echos</u> erzeugt.

Weiterhin treten an besonderen zentralen Einrichtungen (z.B. Mobilen Vermittlungsstellen = MSC) <u>sprachcodierte akustische Echos</u> auf, weil das Echo im TK-Endgerät vor der Übertragung zur Vermittlungseinrichtung (z.B. MSC) mit einem Sprachcoder codiert und an der Vermittlungseinrichtung wieder decodiert wird.

Echo-Unterdrückungseinrichtung für die drei Arten von Echos können sehr unterschiedlich sein, weil die Eigenschaften dieser Echos sich deutlich unterscheiden.

<u>Leitungsechos</u> können eine große Verzögerungszeit aufweisen, da zwischen dem Ort ihrer Entstehung und dem Ort ihrer Kompensation große Laufzeiten liegen können. Solche Laufzeiten werden vorzugsweise verursacht durch Satelliten-Verbindungen und Seekabel, aber auch durch Übertragungssysteme und Endgeräte mit komplexen Übertragungsverfahren (z.B. Bildfernsprechen im ISDN mit etwa 250 ms/Richtung; usw.). Während einer Verbindung bleiben die Leistungsechos meist stationär, d. h. die Echo-Impulsantwort des TK-Kanals bleibt weitgehend unverändert.

Bei <u>akustischen Echos</u> ist die Signallaufzeit wesentlich kleiner, dafür ändert sich die Echo-Impulsantwort des Raumes ständig, insbesondere bei Bewegungen von Personen im Raum.

Bei <u>sprachcodierten akustischen Echos</u> kommt erschwerend hinzu, daß man keine Echo-Impulsantwort mehr messen kann, da man hierbei kein lineares System mehr hat und die Echosignale nicht mehr in ihrer Wellenform mit den ausgesendeten Signalen übereinstimmen wie z.B. beim Mobilfunk; hinzu kommt noch eine Verzögerung von etwa 100 ms/Richtung.

Allgemein ist es nach alledem deshalb bei der Übertragung von einem Gemisch aus Sprachsignal und Störsignalen über TK-Netze wichtig, die Störsignale wie Geräusch und Echo soweit wie möglich in ihrer Amplitude abzusenken. Zu diesem Zweck werden in den Netzknoten der bekannten TK-Netzwerke viele, zum Teil voneinander völlig unterschiedliche Vorrichtungen mit abweichenden und teilweise sich gegenseitig störenden Eigenschaften zur Kompensation und/oder Reduktion von Echo- und/oder Geräuschsignalen eingesetzt.

Ein bekanntes Verfahren zur Geräuschreduktion ist die sogenannte "spektrale Subtraktion". Bei einer spektralen Subtraktion wird zunächst das Geräusch in den Sprachpausen gemessen und in Form eines Leistungsdichtespektrums fortlaufend in einem Speicher abgelegt. Das Leistungsdichtespektrum wird über eine Fourier Transformation gewonnen. Beim Auftreten von Sprache wird sodann das gespeicherte Geräuschspektrum "als bester aktueller Schätzwert" vom aktuellen gestörten Sprachspektrum subtrahiert, sodann in den Zeitbereich zurücktransformiert, um auf diese Weise eine Geräuschreduktion für das gestörte Signal zu erhalten. Ein Nachteil der spektralen Subtraktion besteht darin, daß durch den Vorgang einer prinzipiell nicht genauen spektralen Geräuschschätzung und nachfolgender Subtraktion auch Fehler im Ausgangssignal auftreten, die sich als "musical tones" bemerkbar machen. Außerdem ist dieses bekannte Verfahren prinzipiell nicht zur Unterdrückung von Echosignalen bei TK-Verbindungen geeignet.

Bei der erweiterten spektralen Signalbearbeitung, die beispielsweise in der Veröffentlichung "A new approach to noise reduction based on auditory masking effects" von S. Gustafsson und P. Jax, ITG-Fachtagung, Dresden, 1998, beschrieben ist, handelt es sich um ein spektrales Geräuschabsenkungsverfahren, bei dem eine akustische Verdeckungsschwelle (beispielsweise nach dem MPEG-Standard) berücksichtigt wird. Zunächst werden mit Hilfe einer spektralen Subtraktion die Leistungsdichtespektren für das Geräusch und für die Sprache selbst geschätzt. Aus der Kenntnis dieser Teilspektren wird sodann mit Hilfe z.B. der Regeln aus dem MPEG Standard eine spektrale akustische Verdeckungsschwelle $R_T(f)$ für das menschliche Ohr berechnet. Mit Hilfe dieser Verdeckungsschwelle und den geschätzten Spektren für Geräusch und Sprache wird sodann nach einer einfachen Regel eine Filterdurchlaßkurve $H(f)$ berechnet, die so gestaltet ist, daß wesentliche spektrale Teile der Sprache möglichst unverändert durchgelassen und spektrale Teile des Geräusches möglichst abgesenkt werden. Sodann wird das originale gestörte Sprachsignal nur durch dieses Filter gegeben, um auf diese Weise eine Geräuschreduktion für das gestörte Signal zu erhalten. Der Vorteil dieses Verfahrens besteht nun darin, daß vom gestörten Signal "nichts addiert oder subtrahiert" wird und daher Fehler in den Schätzungen weniger bis kaum wahrnehmbar sind. Nachteilig bei derartigen Verfahren ist die aufwendige Bestimmung dieser akustischen Verdeckungsschwelle und die Ausführung aller mit diesem Verfahren verbundenen Rechenoperationen.

Bei dem bekannten Kompander-Verfahren, wie es beispielsweise in der eingangs zitierten DE 42 29 912 A1 beschrieben ist, wird der Grad der Geräusch- und Echoabsenkung gemäß einer fest vorgegebenen Transferfunktion festgelegt. Der Kompander hat zunächst die Eigenschaft, Sprachsignale mit einem bestimmten (vorab eingestellten) "normalen Sprachsignalpegel" (ggf. normale Lautstärke genannt) praktisch unverändert von seinem Eingang zum Ausgang zu übertragen. Wird nun aber das Eingangssignal einmal zu laut, z.B. weil ein Sprecher zu dicht an sein Mikrofon kommt, so begrenzt ein Dynamik-Kompressor den Ausgangspegel auf nahezu den gleichen Wert wie im Normalfall, indem die aktuelle Verstärkung im Kompander mit zunehmender Eingangslautstärke linear abgesenkt wird. Durch diese Eigenschaft bleibt die Sprache am Ausgang des Kompandersystems etwa gleich laut, unabhängig davon wie stark die Eingangslautstärke schwankt.

Wird nun andererseits ein Signal mit einem Pegel, der kleiner als der Normalpegel ist, auf den Eingang des Kompanders gegeben, so wird das Signal zusätzlich gedämpft, indem die Verstärkung zurückgeregelt wird, um Hintergrundgeräusche möglichst nur abgeschwächt zu übertragen. Der Kompander besteht somit aus einem Kompressor für Sprachsignalpegel, die größer oder gleich einem Normalpegel sind und einem Expander für Signalpegel, die kleiner als der Normalpegel sind. Nachteilig bei der Kompander-Lösung ist, daß durch die Kompression des Sprachsignalpegels eine Modulation hervorgerufen wird, die das Sprachsignal in einer Weise verändert, daß das Ergebnis subjektiv oft als unbefriedigend empfunden wird.

Mit der zunehmenden Vielfalt der auf dem Markt angebotenen TK-Endgeräte (klassisches POT, drahtgebundene oder schnurlose, analoge oder digitale Telefone, Funktelefone etc.) und der großen Anzahl von unterschiedlichen Digitalisierungsverfahren für Sprache (PCM μ-law, PCM A-law, ADPCM, CELP-Coder für Mobilfunk wie FR, HR, EFR, AMR, ...) wird das Thema "Echo- und Geräuschkompensation" immer komplexer und erhält eine neue Dimension, da die unterschiedlichen Verfahren und zugehörigen Einrichtungen auf unterschiedlichen Wegen zu unterschiedlichen Ergebnissen kommen und teilweise in die gleiche Richtung, teilweise aber auch einander entgegengesetzt wirken können. Durch den Einsatz immer neuerer Technologien zur Störsignalbearbeitung treten auch immer neue schwierige Fragen im Hinblick auf das Gesamtergebnis auf:

-　Welchen Qualitätsgewinn oder gar Qualitätsverlust bringt eine stufenweise kaskadierte Echo- bzw. Geräuschkompensation in Nachrichtennetzen?

-　Können sich mehrfach hintereinandergeschaltete Echo- oder Geräuschkompensatoren gleicher oder gar unterschiedlicher Bauart gegenseitig stören?

-　Soll bei mehrfach hintereinandergeschalteten Echo- bzw. Geräuschkompensatoren jeweils nur ein Kompensator pro Übertragungsweg (Hin- und Rückrichtung) im TK-Netzwerk eingeschaltet sein?

-　Soll beim Mobilfunk die Störsignalkompensation im TK-Netzwerk oder im TK-Endgerät erfolgen?

-　Was passiert, wenn beim Mobilfunk im Auto eine Freisprecheinrichtung arbeitet, während in der entsprechenden TK-Verbindung im Netzwerk ein üblicher Echokompensator eingesetzt wird?

- Wenn ein mobiles Endgerät eine gute Echo- bzw. Geräuschkompensation hat, wie kann man erreichen, daß die nachfolgenden Kompensatoren zur Vermeidung von destruktiven Indifferenzen ausgeschaltet werden?

- Wenn ein mobiles Endgerät älterer Bauart keine akustische Echokompensation aufweist, wie kann man erkennen, daß im TK-Netzwerk ein Echokompensator eingeschaltet werden soll?

- Kann man Maßnahmen für eine mögliche Qualitätsverbesserung in einer TK-Verbindung auf verschiedene Stellen bzw. Einheiten im TK-Netzwerk aufteilen und wenn ja, wie?

- Soll man bei mobilem Betrieb mit einer Übermittlung der von einem Handy empfangenen Daten zu einem fernen Handy arbeiten (sogenannte Tandemfree Operation = TFO) oder soll man besser, wie bisher, die Sprache nach PCM A-law zurückkodieren, um anschließend eine bessere Echokompensation durchführen zu können?

Üblicherweise enthalten Vorrichtungen zur Echokompensation in TK-Netzwerken ein adaptives Filter (= FIR), welches versucht, die Echos nachzubilden und vom empfangenen Signal zu subtrahieren und/oder einen nichtlinearen Prozeß (= NLP), mit dessen Hilfe Restechos eliminiert werden sollen. Bei Modembetrieb sehen z.B. die ITU-T Standards vor, den Modemton (2100 Hz) zu erkennen und danach gegebenenfalls vorhandene Echokompensatoren bzw. NLPs im Signalpfad auszuschalten. Ähnliches gilt für die Signalisierungstöne nach dem C5-Standard, einem Vorgänger der CCITT Nr. 7-Signalisierung. Diese an sich bekannten Empfehlungen geben aber keinerlei Vorschrift, wie in den oben genannten Fällen der komplexen Verbindung unterschiedlichster Einrichtungen und Verfahren vorgegangen werden soll.

Aufgabe der vorliegenden Erfindung ist es demgegenüber, ein Verfahren mit den eingangs beschriebenen Merkmalen vorzustellen, bei dem in möglichst übersichtlicher, einheitlicher, unaufwendiger und kostengünstiger Art und Weise eine möglichst optimale Adaption vorhandener Vorrichtungen zur Kompensation und/oder Reduktion von Echo- und/oder Geräuschsignalen an die konkret vorhandenen Bedingungen eines Übertragungsweges bei einer TK-Verbindung in einem beliebigen Bereich eines komplexen TK-Netzwerkes erreicht werden kann und das Zusammenwirken der vorhandenen Vorrichtungen optimiert wird.

Erfindungsgemäß wird diese Aufgabe hinsichtlich der Echobehandlung auf ebenso einfache wie wirkungsvolle Art und Weise durch folgende Verfahrensschritte gelöst:

gekennzeichnet durch folgende Schritte :

(a) Definieren eines einheitlichen Qualitätsmaßes für die Eigenschaften der TK-Endgeräte bezüglich ihrer jeweiligen Generierung von Echosignalen einschließlich eventuell vorhandener Fähigkeiten zu Kompensation und/oder Reduktion von Echosignalen;

(b) Erfassen der dem Qualitätsmaß nach Schritt (a) entsprechenden Qualitätswerte zumindest eines an einer TK-Verbindung beteiligten TK-Endgerätes;

(c) Ermitteln von zusätzlich zu einer ggf. bereits durchgeführten Echoreduktion erforderlichen Maßnahmen um unter Berücksichtigung der in Schritt (b) erfaßten Qualitätswerte die Echosignale auf einen vorher festgelegten Restwert zu reduzieren;

(d) Durchführen der ermittelten Maßnahmen mittels einer Vorrichtung zur Kompensation und/oder Reduktion von Echosignalen in mindestens einer an der TK-Verbindung beteiligten Vermittlungseinrichtung.

Hinsichtlich der Geräuschbehandlung wird die Erfindungsaufgabe durch folgende Schritte gelöst:

(a') Definieren eines einheitlichen Qualitätsmaßes für die Eigenschaften der TK-Endgeräte bezüglich ihrer jeweiligen Abgabe von Geräuschsignalen in das TK-Netzwerk einschließlich eventuell vorhandener Fähigkeiten zu Kompensation und/oder Reduktion von Geräuschsignalen;

(b') Erfassen der dem Qualitätsmaß nach Schritt (a') entsprechenden Qualitätswerte zumindest eines an einer TK-Verbindung beteiligten TK-Endgerätes;

(c') Ermitteln von zusätzlich zu einer ggf. bereits durchgeführten Geräuschreduktion erforderlichen Maßnahmen um unter Berücksichtigung der in Schritt (b) erfaßten Qualitätswerte die Geräuschsignale auf einen vorher festgelegten Restwert zu reduzieren;

(d') Durchführen der ermittelten Maßnahmen mittels einer Vorrichtung zur Kompensation und/oder Reduktion von Geräuschsignalen in mindestens einer an der TK-Verbindung beteiligten Vermittlungseinrichtung.

Durch die Definition und Ermittlung von Qualitätsmerkmalen bei einer TK-Verbindung über ein Kommunikationsnetz können die zentralen Einrichtungen im Netz so eingestellt werden, daß eine optimale Echokompensation und/oder Geräuschreduktion durchgeführt werden kann. Dabei gilt die Regel, daß man nur so viel Signalverarbeitung wie gerade nötig einsetzen sollte, um im störungsfreien Fall die Sprachsignale so natürlich wie möglich zu erhalten.

Die Ermittlung der Qualitätsmerkmale einer TK-Verbindung kann dabei auf sehr verschiedenen Weisen geschehen, wie weiter unten näher erläutert wird:

Einmal können die Endgeräte vorab in Qualitätsklassen eingeteilt werden. Sodann kann jedes Endgerät seine Qualitätsklasse an das Netz signalisieren. Dabei kann insbesondere signalisiert werden, ob es sich um Leistungsechos, akustische Echos oder sprachcodierte Echos handelt, d. h., ob das TK-Engerät ein Zweidrahtgerät oder ein ISDN-Telefon oder ein mobiles Telefon ist. Die Einrichtungen können dann so eingestellt werden, daß eine optimale Echokompensation/Reduktion vorgenommen wird.

Eine andere Art der Ermittlung von Qualitätsmerkmalen kann darin bestehen, in einer Vorrichtung z.B. einer unteren Vermittlungseinrichtung der NetzHierarchie die Qualität der empfangenen Signale zu messen, beispielsweise ihr Restecho, das ggf. unzulässig groß ist, oder auch den Geräuschpegel im Signal. Auch eine Kombination von Signalisierung und Messung ist möglich.

Eine optimale Echokompensation/Reduktion erfolgt immer im Hinblick auf den momentan für die betreffende TK-Verbindung ermittelten Echowert, den Echotyp und den angestrebten Restwert des Echos, der sich insbesondere an der Signallaufzeit der TK-Verbindung im Netz orientiert. Große Signallaufzeiten erfordern einen kleineren Restwert, wogegen kleine Signallaufzeiten einen größeren Restwert erlauben.

Die Einstellung der ggf. verteilten Vorrichtungen im TK-Netzwerk erfolgt so, daß die jeweils nächstgelegene Vorrichtung die vom nahen Ende her kommenden Echos und Geräusche auf einen vorgegebenen Restwert reduziert und diese Reduktion den in der Netzhierarchie weiter oben liegenden Vorrichtung mitteilt. Wird dies in beiden Richtungen unabhängig durchgeführt, so erhält man eine qualitativ hochwertige TK-Verbindung. Dabei ist es unerheblich, ob eine Vorrichtung zur Echo- und/oder Geräuschreduktion bzw. -kompensation in der untersten Netzebene oder in einer weiter höheren Netzebene vorhanden ist. Die jeweils zum Ort der ausgesendeten Signale nächste Vorrichtung wird bevorzugt auf den jeweils optimalen Wert für eine Echounterdrückung bzw. für eine Störsignalbehandlung eingestellt.

Besonders bevorzugt ist eine Variante des erfindungsgemäßen Verfahrens, bei der die dem Qualitätsmaß nach Schritt (a) bzw. (a') entsprechenden Qualitätswerte für die Eigenschaften von Signalen, die von einem oder mehreren TK-Endgeräten und/oder Vermittlungseinrichtungen kommen, in mindestens einer jeweils übergeordneten Vermittlungseinrichtung erfaßt werden.

Bevorzugt ist dabei eine Weiterbildung, bei der die Qualitätswerte von TK-Endgeräten bzw. von an der TK-Verbindung beteiligten Vorrichtungen zur Kompensation und/oder Reduktion von Echo- und/oder Geräuschsignalen, die in Vermittlungseinrichtungen vorhanden sind, welche in der TK-Netzwerk-Hierarchie an untergeordneter Stelle eingesetzt sind, jeweils durch eine übergeordnete Vermittlungseinrichtung erfaßt werden.

Weil von vornherein einem TK-Endgerät und einem TK-Netzbetreiber nicht bekannt ist, wo überall im TK-Netzwerk welche Vorrichtungen zur Echo- und Geräuschreduktion bzw. -kompensation eingesetzt sind, und da eine möglichst optimale Funktion der Vorrichtung erreicht werden soll, so daß sich die Vorrichtungen gegenseitig möglichst nicht stören, ist es vorteilhaft, wenn

a) eine jede Einrichtung im Netz primär in eine Vorzugsrichtung "schaut", vorzugsweise zum nahen TK-Teilnehmer hin;

b) anhand von Signalisierungen einer unteren Einrichtung oder eines Endgerätes und/oder anhand von eigenen Messungen erkennt, um welche(n) Echotypen oder Geräusche es sich handelt;

c) dementsprechend eine Berechnung durchführt;

d) danach ihre eigene Vorrichtung zur Echo- und Geräuschreduktion bzw. - kompensation so einstellt, daß die Signale bei Bedarf geeignet bearbeitet werden oder daß die Signale unverändert durchgereicht werden, um ihre Qualität so gut wie möglich zu erhalten.

Bevorzugt ist es weiterhin, wenn die Maßnahmen nach Schritt (c) bzw. (c') im Zusammenwirken zwischen den in den beteiligten Vermittlungseinrichtungen eingesetzten Vorrichtungen ermittelt und bei mindestens einer Vorrichtung dieser Vermittlungseinrichtungen durchgeführt werden. Die Abstimmung zwischen den Vorrichtungen an verschiedenen Stellen im TK-Netzwerk soll verhindern, daß die Vorrichtungen bei der Signalbearbeitung sich gegenseitig in ungünstiger Weise beeinflussen, z.B. indem beide Systeme die gleiche Signalrichtung bearbeiten und dabei die gestörte Sprache zu weit verändern.

Bei einer bereits oben angedeuteten Variante des erfindungsgemäßen Verfahrens werden die Qualitätswerte in Schritt (b) bzw. (b') zumindest zum Teil durch Messung der von den entsprechenden TK-Endgeräten abgehenden Signale erfaßt. Eine Messung der Signalqualitäten ist dann vorteilhaft, wenn alte TK-Endgeräte oder alte Einrichtungen an der TK-Verbindung beteiligt sind, die eine Signalisierung und/oder eine gegenseitige Abstimmung zwischen den Einrichtungen noch nicht kennen. Dabei schaut jede neue Einrichtung vorzugsweise in die Richtung des nahe gelegenen Teilnehmers und mißt die Qualitäten der empfangen Signale.

Besonders bevorzugt ist eine weitere Verfahrensvariante, bei der die Qualitätswerte in Schritt (b) zumindest zum Teil durch aktive Signalisierung derselben von den entsprechenden TK-Endgeräten an ihre jeweils übergeordnete Vermittlungseinrichtung beim Aufbau der TK-Verbindung erfaßt werden. Eine aktive Signalisierung hat den Vorteil, daß ein TK-Endgerät und/oder eine untere Einrichtung einer weiter oben in der Netzhierarchie liegenden Einrichtung genauere Informationen geben kann, welche Signalqualitäten vorliegen und welche Maßnahmen der Signalverarbeitung bereits durchgeführt worden sind bzw. welche noch nicht durchgeführt worden sind.

Eine weitere Variante des erfindungsgemäßen Verfahrens sieht vor, daß einmal erfaßte Qualitätswerte von TK-Endgeräten bei einer Vermittlungseinrichtung, vorzugsweise bei der dem jeweiligen TK-Endgerät direkt übergeordneten Vermittlungseinrichtung und/oder bei einer zentralen Speichereinrichtung im TK-Netzwerk abgespeichert werden.

Eine weitere Verbesserung besteht darin, daß die Qualitätswerte in Schritt (b) zumindest zum Teil durch Auslesen der entsprechenden abgespeicherten Daten erfaßt werden.

Für eine TK-Verbindung werden vorteilhaft die Qualitätsmaße der Signale und die evtl. getroffenen Maßnahmen der Signalverarbeitung in einem Speicher der Vorrichtung oder der Vermittlungseinheit abgelegt, damit ggf. alle anderen Vorrichtungen im TK-Netzwerk bzw. der TK-Verbindung darauf zurückgreifen können, um

a) eine wechselseitige negative Beeinflussung der Echo- und/oder Geräuschreduktion bzw. -kompensation untereinander zu vermeiden,
b) eine optimale Einstellung aller Vorrichtungen in der TK-Verbindung zu ermögliche,
c) eine zentrale Auswertung der Signal-Qualitäten im Netzabschnitt zu ermöglichen und so frühzeitig Mängel in Netzabschnitten zu erkennen.

Ganz besonders bevorzugt ist eine Variante des erfindungsgemäßen Verfahrens, bei der die Qualitätswerte des Qualitätsmaßes nach Schritt (a) bzw. (a') in n Qualitätsklassen eingeteilt werden. Eine Einteilung in Qualitätsklassen (z.B. der TK-Endgeräte, der Einrichtungen) ermöglicht,

a) eine einfachere Berechnung in den übergeordneten Einrichtungen bzgl. der durchzuführenden Signalbearbeitung, z.B. durch Ablesen der Sollwerte in Tabellen,
b) eine ggf. einfachere Signalisierung zwischen den Einrichtungen,
c) ggf. einen Verzicht auf aufwendige Messung der Signalqualitäten in jeder übergeordneten Einrichtung

Eine Einteilung in Restechoklassen nach Dezibel (= dB)-Werten entspricht derzeit dem allgemeinen Verständnis, nach dem Restechos in dB gemessen werden. Für die Berechnung der Sollwerte eines Restechos in dB existieren Formeln in den Spezifikationen der Standardisierungsorganisationen (ITU-T).

Eine Klassifizierung nach weiteren Eigenschaften von Echoreduktionsvorrichtungen, beispielsweise eine Einteilung in Bereiche von Konvergenzzeiten, ist sinnvoll, insbesondere in Anlehnung an die derzeitigen Vorschriften der Standardisierungsorganisationen (ITU-T).

Bei einer weiteren Variante des erfindungsgemäßen Verfahrens können die zusätzlich erforderlichen Maßnahmen in Schritt (c) bzw. (c') durch Berechnung aus den in Schritt (b) bzw. (b') erfaßten Qualitätswerten, vorzugsweise in einer der an der TK-Verbindung beteiligten Vermittlungseinrichtungen oder in einem zentralen Prozessor im TK-Netzwerk ermittelt werden. Eine Berechnung der erforderlichen Zusatzdämpfung von Echos hat den Vorteil, daß man auf diese Weise nur das unbedingt erforderliche Maß an Signalverarbeitung durchführt, um die gestörte Sprache so natürlich wie möglich zu erhalten.

Eine alternative Variante des erfindungsgemäßen Verfahrens zeichnet sich dadurch aus, daß die zusätzlich erforderlichen Maßnahmen in Schritt (c) bzw. (c') aufgrund der in Schritt (b) bzw. (b') erfaßten Qualitätswerte durch Ablesen aus einer an das TK-Netzwerk angeschlossenen Speichereinrichtung, in der eine Matrix der zu ergreifenden Maßnahmen bei bestimmten Konstellationen von an einer TK-Verbindung beteiligten Vermittlungseinrichtungen und Qualitätswerten der TK-Endgeräte abgespeichert ist, vorzugsweise von einer der an der TK-Verbindung beteiligten Vermittlungseinrichtungen oder von einem zentralen Prozessor im TK-Netzwerk ermittelt werden. Eine Ablesung der zusätzlich erforderlichen Maßnahmen und ihrer Stärke aus gespeicherten Tabellen hat den Vorteil, daß man die Rechenleistung der in der Vorrichtung beteiligten Prozessoren ganz für die unter Umständen sehr komplexe Signalverarbeitung in Echtzeit zur Verfügung hat.

Eine weitere vorteilhafte Variante des erfindungsgemäßen Verfahrens sieht vor, daß das in Schritt (a) definierte Qualitätsmaß die Echokopplung $TCL_W$ (=Terminal Coupling Loss, weighted) des entsprechenden TK-Endgeräts berücksichtigt. Wenn die Echo-Kopplung eines TK-Endgerätes bekannt ist, so kann eine Berechnung der ggf. erforderlichen zusätzlichen Echodämpfung sehr einfach anhand der ermittelten Signallaufzeit im TK-Kanal vorgenommen werden.

Weiterhin ist es vorteilhaft, wenn das in Schritt (a) bzw. (a') definierte Qualitätsmaß die Konvergenzzeit einer Vorrichtung zur Kompensation und/oder Reduktion von Echo- und/oder Geräuschsignalen des entsprechenden TK-Endgeräts berücksichtigt. Wenn Kompensatoren verschiedener Hersteller im TK-Netzwerk in Betrieb sind, die unterschiedliche Konvergenzzeiten benötigen, so kann es vorteilhaft sein, dieses Verhalten in einer moderneren Vorrichtung zu berücksichtigen, z.B. um fehlerhafte Messungen zu Beginn einer Verbindung zu vermeiden.

Bei einer weiteren vorteilhaften Verfahrensvariante berücksichtigt das in Schritt (a) bzw. (a') definierte Qualitätsmaß die Größe des Restechos im Double-Talk-Betrieb zwischen den beteiligten TK-Endgeräten. Die Einstellung von Vorrichtungen zur Echo- und/oder Geräuschreduktion ist besonders schwierig beim Auftreten von "Double-Talk", wenn beide Sprecher gleichzeitig sprechen. Die Größe des Restechos in diesem Betriebsmodus ist auch ein Maß für die Qualität der eingeschalteten Vorrichtungen zur Echoreduktion.

Vorteilhafterweise wird auch die maximale Signallaufzeit bei der TK-Vebindung festgestellt und bei der Ermittlung der Maßnahmen in Schritt (c) bzw. (c') berücksichtigt. Damit können, wie bereits oben erwähnt, ggf. erforderliche zusätzliche Echodämpfungsmaßnahmen besonders einfach berechnet werden.

Besonders bevorzugt ist eine Variante des erfindungsgemäßen Verfahrens, bei der mittels Sprach-Pausen-Detektion ermittelt wird, wann in der zu übertragenden Mischung aus Nutzsignalen und Störsignalen ein Sprachsignal enthalten ist oder wann eine Sprachpause vorliegt. Eine Einrichtung zur Detektion von Sprachpausen bietet den Vorteil, daß das Geräusch in Sprachpausen besonders einfach, z.B. mittels eines Expanders, reduziert werden kann.

Eine gute Geräuschpegel-Schätzung erfordert einen guten Sprach-Pausen-Detektor, da man nur dann sicher sein kann, daß in den Sprachpausen-Abschnitten lediglich störendes Geräusch und nicht irgendeine Mischung zwischen Geräusch und Sprachfetzen vorliegt, wie es in der Praxis häufig vorkommt.

Man kann vorteilhaft eine gehörrichtige Geräuschabsenkung mit einer unabhängig davon arbeitenden Echoreduktion verbinden. Das ist besonders dann wichtig, wenn im Telefonkanal so gut wie kein Hintergrundgeräusch existiert, da dann keine Geräuschabsenkung wirksam wird, und somit auftretende Echos ungehindert zum Sprecher gelangen können.

Eine Trennung der Steuerung einer Geräuschreduktion von der einer Echoabsenkung ist zweckmäßig, da Geräusche und Echos unabhängig voneinander auftreten und auch in der Regel völlig unterschiedliche physikalische Ursachen haben. Man kann aber mathematisch eine generelle Reduktionsfunktion R angeben, die eine Absenkung von Signalpegeln sowohl für Geräusche als auch für Echos beschreibt:

$$R(S, N, ES, \tau_E, ERL, thrs) \sim g(S/N) \cdot d(ES, \tau_E, ERL, thrs),$$

wobei g(S/N) eine vom aktuellen Signal-zu-Geräuschabstand S/N abhängige Geräuschreduktion und d(...) die unabhängig zusätzlich einsetzende Echoabsenkung bedeuten, wenn das geschätzte Echosignal den vorgegebenen Schwellwert thrs überschreitet.

Besonders vorteilhaft ist eine Verfahrensvariante, bei der während der Zeitdauer einer Echo-Reduktion zum Nutzsignal zusätzlich ein künstliches Geräuschsignal addiert wird.

Eine Geräuschabsenkung ist bei gleichbleibendem Geräuschpegel konstant. Eine plötzlich zusätzlich einsetzende Echoreduktion im Rhythmus der Sprache bedeutet auch eine Geräuschabsenkung (zumindest in dem kurzen Zeitabschnitt) im Sprachrhythmus. Dies führt zu einem gepulsten Hintergrundgeräusch, welches sich nicht natürlich anhört. Daher ist es vorteilhaft, in den Augenblicken einer zusätzlichen Echoreduktion ein synthetisches Geräusch eines geeigneten Rauschgenerators in der Größenordnung des normalen Hintergrundgeräusches zum bearbeiteten Signal hinzuzufügen. Damit soll ein möglichst gleichbleibendes Hintergrundgeräusch für den Hörer vermittelt werden. Fügt man einem Signal künstliches Rauschen hinzu, so hilft dies

a) bei völlig ungestörter Übertragung evtl. den Eindruck einer Leitungsunterbrechung während der Sprachpausen zu vermeiden;

b) Schwachstellen bei der Signalbearbeitung (z.B. kurze Stummschaltung bei Echos) durch ein leises Geräusch zu maskieren.

Der Rauschgenerator kann so gestaltet werden, daß das künstliche Geräuschsignal eine psychoakustisch als angenehm empfundene akustische Signalsequenz (=comfort noise) umfaßt. Als künstliches Geräusch eignen sich Rauschsignale, die dem natürlichen Geräusch im Kanal möglichst ähnlich sind.

Anstelle eines synthetischen Hintergrundgeräusches kann aber auch ein Abschnitt eines zuvor aufgezeichneten echten Hintergrundgeräusches in passender Stärke in den Echozeitabschnitten eingefügt werden. Das hinzugefügte Geräusch unterscheidet sich dann so gut wie überhaupt nicht vom vorherigen Geräusch und wird daher keinen störenden akustischen Eindruck beim Hörer hervorrufen.

Das Hinzufügen von Geräuschen zur akustischen Verdeckung von Effekten sowie die Maßnahmen einer getrennten Behandlung von Geräuschen und Echos werden, wenn sie richtig aufeinander abgestimmt sind, einen besonders verständlichen und angenehmen Spracheindruck auch bei "schwieriger" Umgebung (Echos plus Geräusche) bewirken.

Besonders bevorzugt ist auch eine Variante des erfindungsgemäßen Verfahrens, bei der das zu übertragende Nutzsignal einer spektralen Subtraktion unterzogen wird. Der Vorteil einer spektralen Subtraktion mit nachgeschalteter Pegelabsenkung in den Sprachpausen besteht darin, daß zuerst mittels spektraler Subtraktion ein Teil der Störgeräusche aus dem Sprachsignal selbst eliminiert wird und erst danach die Sprachpausen in der beschriebenen Art von Geräuschen und Echos befreit werden. Insgesamt ergibt diese Kombination bei subjektiven Tests bessere Höreindrücke als nur eine spektrale Subtraktion.

Eine weitere besonders vorteilhafte Variante des erfindungsgemäßen Verfahrens sieht vor, daß das zu übertragende Nutzsignal einer dem menschlichen Gehör angepaßten spektralen Filterung unterzogen wird. Auch hier wird mit den Mitteln einer spektralen Subtraktion zunächst eine Schätzung von Geräuschen, von Sprache und den Echos durchgeführt, sodann eine gehörrichtige Verdeckungsschwelle bestimmt und dann das gesamte Signal über ein passend eingestelltes Übertragungsfilter so bearbeitet, daß die Sprachanteile möglichst unverfälscht und die Echo- und Geräuschanteile möglichst weitgehend unterdrückt werden.

Eine Kombination mit der nachgeschalteten Pegelabsenkung in den Sprachpausen verbessert den Höreindruck weiter.

Schließlich können in den Vorrichtungen zur Kompensation und/oder Reduktion von Echo- und/oder Geräuschsignalen auch Center-Clipper, dynamisch gesteuerte Expander, sprachpausen-gesteuerte Expander und/oder Kompander eingesetzt werden.

Jedes dieser Verfahren hat spezifische Vor- und Nachteile. Durch eine geeignete Kombination der Verfahren kann man bedarfsabhängig die Optimierung in Richtung bester Sprachqualität oder z.B. kleinster Rechenleistung verschieben.

In den Rahmen der vorliegenden Erfindung fällt auch eine Servereinheit, eine Prozessor-Baugruppe sowie eine Gate-Array-Baugruppe zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's bevorzugt, da neue Erkenntnisse und Zusatzfunktionen leichter durch eine Veränderung der Software auf bestehender Hardwarebasis implementierbar sind. Verfahren können aber auch als Hardwarebausteine beispielsweise in TK-Endgeräten oder Telefonanlagen implementiert werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:

Fig. 1     ein schematische Ablaufdiagramm des erfindungsgemäßen Verfahrens für Echo- und Geräuschbehandlung; und

Fig. 2     eine schematische Darstellung der unterschiedlichen Verbindungswege in einem modernen TK-Netzwerk.

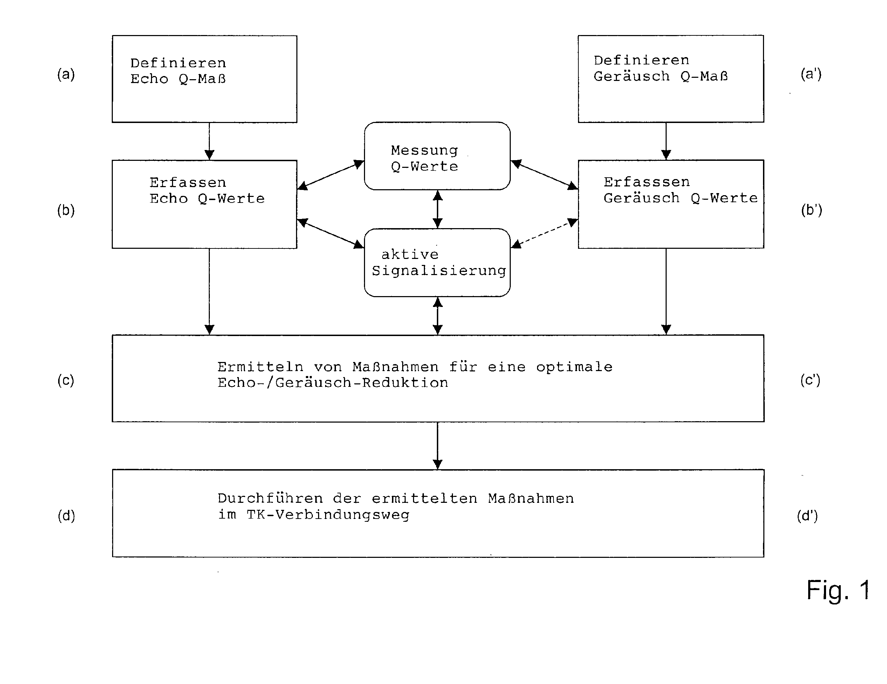

In dem in Fig. 1 gezeigten Flußdiagramm sind die Verfahrensschritte sowohl für Echo- als auch für die Geräuschbehandlung nach dem erfindungsgemäßen Verfahren gemeinsam dargestellt. Im Unterschied zur Erfassung der Qualitätswerte bezüglich der Geräuschsignale, die ausschließlich durch Messung erfolgen können, kann die Erfassung der Echo-Qualitätswerte alternativ oder zusätzlich auch durch aktive Signalisierung von den TK-Endgeräten erfolgen. Aus den erfaßten Qualitätswerte werden sodann Maßnahmen zur optimalen Adaption der Einrichtungen auf dem konkret zu behandelnden Verbindungspfad hinsichtlich der bestmöglichen Echo- und/oder Geräuschreduktion ermittelt und durch Signalisierungen zwischen den Einrichtungen im TK-Pfad untereinander abgestimmt.

Im letzten Schritt schließlich werden die gefundenen Maßnahmen dann in den beteiligten Einrichtungen umgesetzt.

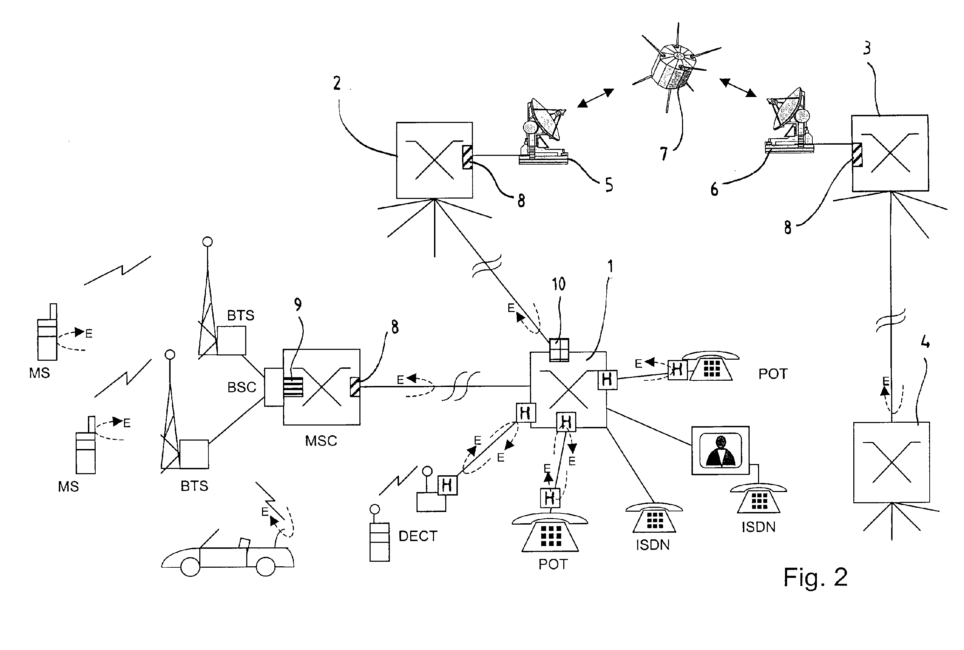

Bei dem in Fig. 2 dargestellen Ausschnitt aus einer komplexen Situation in einem modernen TK-Netzwerk sind als TK-Endgeräte Mobiltelefone (MS), schnurlose Telefone (DECT), analoge Telefone nach alter Bauart (POT), digitale Telefone (ISDN) sowie Bildfernsprecher gezeigt. Als Vermittlungseinrichtungen sind eine Ortsvermittlungsstelle 1, Fernvermittlungsstellen 2, 3, 4, eine Mobilfunkvermittlungsstelle (MSC) mit einer Steuereinheit (BSC) für Sende- und Empfangsstationen, Sende- und Empfangsstationen für Mobilfunk (BTS), Satellitenfunkanlagen 5, 6 sowie ein Fernmeldesatellit 7 eingezeichnet. Ein Teil der Vermittlungseinrichtungen enthält einen Kompensator 8 für Leitungsechos und Geräuschreduktion. In der Mobilfunk-Vermittlungsstelle MSC ist außerdem ein Kompensator 9 für sprachkodierte akustische Echos von TK-Endgeräten vorgesehen, die mit einer Sprachcodierung arbeiten, wobei der Kompensator 9 auch eine Geräuschreduktion vornehmen kann. In der Ortsvermittlungsstelle 1 schließlich ist auch ein Kompensator 10 für akustische Echos von Endgeräten und Leitungsechos ohne Sprachcodierung sowie eventuell mit der Möglichkeit zur Geräuschreduktion vorgesehen.

Mögliche Echoreflexionen an sogenannten Hybriden H, also Gabelschaltungen für eine Zweidraht-Vierdraht-Umsetzung sind mit gestrichelten Pfeilen dargestellt und mit der Bezugsziffer E bezeichnet.

Für die in Fig. 2 dargestellte, verwirrend komplexe Situation, wie sie in modernen Telekommunikationsnetzen typischerweise vorkommt, wobei der Komplexitätsgrad durch ständige technische Neuerungen zunimmt, kann die Echo- und/oder Geräuschbehandlung mit Hilfe des erfindungsgemäßen Verfahrens auf übersichtliche und einfache Weise an die konkrete Verbindungssituation adaptiert und damit optimal gestaltet werden.

## Patentansprüche

1. Verfahren zur Kompensation und/oder Reduktion von Echosignalen bei Telekommunikations(=TK)-Systemen für die Übertragung von akustischen Nutzsignalen, insbesondere menschlicher Sprache, in TK-Netzwerken, in denen TK-Endgeräte (POT, DECT, ISDN, MS) über Vermittlungseinrichtungen (1, 2, 3, 4, 5 ,6 ,7, MSC, BSC, BTS) und Übertragungsstrecken miteinander verbunden werden, wobei zumindest in einer Teilmenge von TK-Endgeräten und/oder zumindest in einer Teilmenge von Vermittlungseinrichtungen (1, 2, 3, MSC) Vorrichtungen (8, 9 ,10) zur Kompensation und/oder Reduktion von Echosignalen vorhanden sind,
gekennzeichnet durch folgende Schritte :

   (a) Definieren eines einheitlichen Qualitätsmaßes für die Eigenschaften der TK-Endgeräte (POT, DECT, ISDN, MS) bezüglich ihrer jeweiligen Generierung von Echosignalen einschließlich eventuell vorhandener Fähigkeiten zu Kompensation und/oder Reduktion von Echosignalen;

   (b) Erfassen der dem Qualitätsmaß nach Schritt (a) entsprechenden Qualitätswerte zumindest eines an einer TK-Verbindung beteiligten TK-Endgerätes (POT, DECT, ISDN, MS);

   (c) Ermitteln von zusätzlich zu einer ggf. bereits durchgeführten Echoreduktion erforderlichen Maßnahmen um unter Berücksichtigung der in Schritt (b) erfaßten Qualitätswerte die Echosignale auf einen vorher festgelegten Restwert zu reduzieren;

   (d) Durchführen der ermittelten Maßnahmen mittels einer Vorrichtung (8, 9, 10) zur Kompensation und/oder Reduktion von Echosignalen in mindestens einer an der TK-Verbindung beteiligten Vermittlungseinrichtung (1, 2, 3, MSC).

2. Verfahren zur Kompensation und/oder Reduktion von Geräuschsignalen bei Telekommunikations(=TK)-Systemen für die Übertragung von akustischen Nutzsignalen, insbesondere menschlicher Sprache, in TK-Netzwerken, in denen TK-Endgeräte (POT, DECT, ISDN, MS) über Vermittlungseinrichtungen (1, 2, 3, 4, 5 ,6 ,7, MSC, BSC, BTS) und Übertragungsstrecken miteinander verbunden werden, wobei zumindest in einer Teilmenge von TK-Endgeräten und/oder zumindest in einer Teilmenge von Vermittlungseinrichtungen (1, 2, 3, MSC) Vorrichtungen (8, 9 , 10) zur Kompensation und/oder Reduktion von Geräuschsignalen vorhanden sind, insbesondere nach Anspruch 1,
gekennzeichnet durch folgende Schritte :

   (a') Definieren eines einheitlichen Qualitätsmaßes für die Eigenschaften der TK-Endgeräte (POT, DECT, ISDN, MS) bezüglich ihrer jeweiligen Abgabe von Geräuschsignalen in das TK-Netzwerk einschließlich eventuell vorhandener Fähigkeiten zu Kompensation und/oder Reduktion von Geräuschsignalen;

(b') Erfassen der dem Qualitätsmaß nach Schritt (a') entsprechenden Qualitätswerte zumindest eines an einer TK-Verbindung beteiligten TK-Endgerätes (POT, DECT, ISDN, MS);

(c') Ermitteln von zusätzlich zu einer ggf. bereits durchgeführten Geräuschreduktion erforderlichen Maßnahmen um unter Berücksichtigung der in Schritt (b') erfaßten Qualitätswerte die Geräuschsignale auf einen vorher festgelegten Restwert zu reduzieren;

(d') Durchführen der ermittelten Maßnahmen mittels einer Vorrichtung (8, 9, 10) zur Kompensation und/oder Reduktion von Geräuschsignalen in mindestens einer an der TK-Verbindung beteiligten Vermittlungseinrichtung (1, 2, 3, MSC).

3. Verfahren nach einem der vorhergehenden Ansprüche, dadurch gekennzeichnet, daß die dem Qualitätsmaß nach Schritt (a) bzw. (a') entsprechenden Qualitätswerte für die Eigenschaften von einem oder mehreren TK-Endgeräten (POT, DECT, ISDN, MS) in mindestens einer jeweils übergeordneten Vermittlungseinrichtung (1, 2, 3, 4, 5 ,6 ,7, MSC, BSC, BTS) erfaßt werden.

4. Verfahren nach Anspruch 3, dadurch gekennzeichnet, daß die Qualitätswerte von TK-Endgeräten (POT, DECT, ISDN, MS) bzw. die Qualitätswerte von an der TK-Verbindung beteiligten Vorrichtungen (8, 9, 10) zur Kompensation und/oder Reduktion von Echo- und/oder Geräuschsignalen, die in Vermittlungseinrichtungen (1, 2, 3, MSC) vorhanden sind, welche in der TK-Netzwerk-Hierarchie an untergeordneter Stelle eingesetzt sind, jeweils durch eine übergeordnete Vermittlungseinrichtung erfaßt werden.

5. Verfahren nach Anspruch 4, dadurch gekennzeichnet, daß die Maßnahmen nach Schritt (c) bzw. (c') im Zusammenwirken zwischen den in den beteiligten Vermittlungseinrichtungen (1, 2, 3, MSC) eingesetzten Vorrichtungen (8, 9, 10) ermittelt und bei mindestens einer Vorrichtung (8, 9, 10) dieser Vermittlungseinrichtungen (1, 2, 3, MSC) durchgeführt werden.

6. Verfahren nach einem der vorhergehenden Ansprüche, dadurch gekennzeichnet, daß die Qualitätswerte in Schritt (b) bzw. (b') zumindest zum Teil durch Messung der von den entsprechenden TK-Endgeräten (POT, DECT, ISDN, MS) abgehenden Signale erfaßt werden.

7. Verfahren nach einem der vorhergehenden Ansprüche, dadurch gekennzeichnet, daß die Qualitätswerte in Schritt (b) bzw. (b') zumindest zum Teil durch aktive Signalisierung derselben von den entsprechenden TK-Endgeräten (POT, DECT, ISDN, MS) an ihre jeweils übergeordnete Vermittlungseinrichtung (1, MSC) beim Aufbau der TK-Verbindung erfaßt werden.

8. Verfahren nach einem der vorhergehenden Ansprüche, dadurch gekennzeichnet, daß einmal erfaßte Qualitätswerte von TK-Endgeräten (POT, DECT, ISDN, MS) bei einer Vermittlungseinrichtung (1, 2, 3, 4, 5, 6, 7, MSC, BSC, BTS), vorzugsweise bei der dem jeweiligen TK-Endgerät (POT, DECT, ISDN, MS) direkt übergeordneten Vermittlungseinrichtung (1, MSC) und/oder bei einer zentralen Speichereinrichtung im TK-Netzwerk abgespeichert werden, und daß die Qualitätswerte in Schritt (b) bzw. (b') zumindest zum Teil durch Auslesen der entsprechenden abgespeicherten Daten erfaßt werden.

9. Verfahren nach einem der vorhergehenden Ansprüche, dadurch gekennzeichnet, daß die Qualitätswerte des Qualitätsmaßes nach Schritt (a) bzw. (a') in n Qualitätsklassen eingeteilt werden.

10. Verfahren nach einem der vorhergehenden Ansprüche, dadurch gekennzeichnet, daß die zusätzlich erforderlichen Maßnahmen in Schritt (c) bzw. (c') durch Berechnung aus den in Schritt (b) bzw. (b') erfaßten Qualitätswerten, vorzugsweise in einer der an der TK-Verbindung beteiligten Vermittlungseinrichtungen (1, 2, 3, 4, 5 ,6 ,7, MSC, BSC, BTS) oder in einem zentralen Prozessor im TK-Netzwerk ermittelt werden.

11. Verfahren nach einem der Ansprüche 1 bis 9, dadurch gekennzeichnet, daß die zusätzlich erforderlichen Maßnahmen in Schritt (c) bzw. (c') aufgrund der in Schritt (b) bzw. (b') erfaßten Qualitätswerte durch Ablesen aus einer an das TK-Netzwerk angeschlossenen Speichereinrichtung, in der eine Matrix der zu ergreifenden Maßnahmen bei bestimmten Konstellationen von an einer TK-Verbindung beteiligten Vermittlungseinrichtungen (1, 2, 3, 4, 5, 6, 7, MSC, BSC, BTS) und Qualitätswerten der TK-Endgeräte (POT, DECT, ISDN, MS) abgespeichert ist, vorzugsweise von einer der an der TK-Verbindung beteiligten Vermittlungseinrichtungen (1, 2, 3, 4, 5 ,6 ,7, MSC, BSC, BTS) oder von einem zentralen Prozessor im TK-Netzwerk ermittelt werden.

Fig. 1

Fig. 2